# EUROPÄISCHE PATENTSCHRIFT

(11) **EP 2 607 001 B1**
(45) Veröffentlichungstag und Bekanntmachung des Hinweises auf die Patenterteilung: **19.11.2014**
(21) Anmeldenummer: 12196228.6
(22) Anmeldetag: 10.12.2012
(51) Int. Cl.: B22F 3/10, B23C 5/28, B23B 27/10, B23D 77/00, B23G 5/00, B23Q 11/10, B22F 3/11, B22F 3/105, C22C 29/08

(54) **Kühlung von spanenden Werkzeugen**
Cooling of machining tools
Refroidissement d'outils d'usinage

(30) Priorität: 22.12.2011 EP 11195386
(43) Veröffentlichungstag der Anmeldung: 26.06.2013
(73) Patentinhaber: Technische Universität Darmstadt, 64285 Darmstadt (DE)
(72) Erfinder: Abele, Eberhard, 77815 Bühl (DE); Dewald, Mario, 57642 Alpenrod (DE); Fischer, Jakob, 65527 Engenhahn (DE)
(74) Vertreter: Patentanwälte Olbricht Buchhold Keulertz

(56) Entgegenhaltungen:
- EP-A1- 1 864 748
- DE-C1- 19 730 539
- FR-A- 1 593 553
- US-A- 3 571 877
- US-A1- 2010 254 772

## Beschreibung

Die vorliegende Erfindung betrifft die Kühlung von spanenden Werkzeugen, insbesondere solchen zur Zerspanung mit geometrisch bestimmter Schneide.

### Stand der Technik

Bei der prozessoptimalen Einstellung der Zerspanung mit geometrisch bestimmter Schneide, wie beispielsweise durch Drehmeißel, Fräswerkzeuge und sonstige handelt es sich um die Einstellung aller verfügbaren Prozessparameter mit dem Ziel einen kosteneffizienten Prozess zu realisieren. Dabei werden unter konventionellen Bedingungen das Werkzeug, die Einstellparameter und die Eingriffsparameter dem zu bearbeitenden Werkstoff und der Zielgeometrie angepasst. Optimierungsparameter sind hierbei die sich einstellenden Verschleißerscheinungen, also die Standzeit des Werkzeuges und die Produktivität, gemessen in Zeitspanvolumen. Gerade bei schwer zu zerspanenden Werkstoffen, wie Titan, nickelbasierte Legierungen oder besonderen Gusseisen, entstehen hohe Temperaturen, welche es im Sinne einer Optimierung zu reduzieren gilt.

Dazu wird zum Beispiel die Kühlung von Wendeschneidplatten heute durch Kühlung von außen, etwa durch Zufuhr von flüssigem Stickstoff oder anderen Kühlmedien.

Die Kühlmedien belasten dabei häufig die Umwelt im Sinne des Bedieners der Maschinen oder im Sinne der Verunreinigung der an sich wieder nutzbaren Späne.

### Aufgabe

Nächstliegender Stand der Technik ist DE 197 30 539 C1, der ein Werkzeug gemäß dem Oberbegriff des Anspruchs 1 offenbart.Es ist Aufgabe der Erfindung eine Alternative Lösung zu finden, um die Wärmemenge im Verdampfungsbereich aufzunehmen.

### Lösung der Aufgabe

Diese Aufgabe wird gelöst durch ein Werkzeug gemäß Anspruch 1.

Vorteilhafte Ausführungsbeispiele werden im Folgenden beschrieben oder/und sind in den Unteransprüchen beschrieben.

Aufgrund neuester Untersuchungen konnte bewiesen werden, dass die Temperatur des Schneidstoffes einen entscheidenden Einfluss auf die Standzeit hat. So ist die Temperierung der Schneide eine wesentliche Möglichkeit die Kosteneffizienz der Zerspanungsprozesse zu beeinflussen.

Der Zusammenhang aus der thermodynamischen Situation und der prozessoptimalen Einstellung ergibt sich über den thermodynamischen Schneidstoffparameter Wärmeeindringkoeffizient. Über die Einstellung eines möglichst hohen Wärmeeindringkoeffizienten wird ein hohes Energieleitungsvermögen des Schneidstoffes gewährleistet. Dadurch können die entstehende Reib- und Umformenergie aus dem Entstehungsbereich abgeführt werden.

Der Wärmeeindringkoeffizient ist von der Temperatur des Körpers nicht linear abhängig. Über den gesamten möglichen Temperaturbereich von 0°K bis zum Schmelzpunkt des Schneidstoffes ergeben sich mehrere Maxima. So ergibt sich die Möglichkeit den Wärmeeindringkoeffizienten über die Temperierung des Schneidstoffes zu regulieren. Dieser Sachverhalt kann genutzt werden, um den Wärmeeindringkoeffizienten durch Regelung der Temperatur des Schneidstoffes optimal hoch einzustellen. Dadurch kann eine Minimierung des Verschleißes herbeigeführt und somit der Prozess kostenoptimal eingestellt werden.

Überraschenderweise konnte gefunden werden, dass durch Vorsehung einer innenliegenden Verdampferkühlung in Hartmetallwerkzeugen, wie z.B. in eine Wendeschneidplatte, die Temperatur des Schneidstoffs oder des Werkzeugs deutlich effektiver gesenkt und feiner reguliert oder gesteuert werden konnte, als durch externe Kühlung.

Durch den Entzug definierter Wärmemengen aus dem Hartmetall können definiert prozessoptimale Schneidstoffeigenschaften herbeigeführt werden. So ist zum Bespiel die Wärmeleitfähigkeit von Hartmetall K10 bei 100°K um den Faktor 4 höher, als bei 293°K einstellbar. Diese signifikante Steigerung lässt sich bei der Zerspanung ausnutzen, um die durch Reibung entstehenden großen Energiemengen abzuführen und so die schneidstoffschädigende Entstehung höchster Temperaturen, die zur Erweichung des Schneidstoffs führt und so zu einem sehr frühen Verschleiß, deutlich reduzieren.

Die Implementierung einer Verdampferkühlung z.B. in Schneidplatten hat zwei vorteilhafte Aspekte für die Anwender einer solchen Technologie. Zum einen erlaubt sie eine thermische Beeinflussung mit einem hohen Wirkungsgrad für die Energieübertragung. Zum anderen kommt hier ein geschlossener Kreislauf zum Einsatz. Die Idee eines geschlossenen Innentemperierkreislaufes eines Werkzeuges wird dabei durch die steigenden Kosten für den Einsatz, die Pflege, die Aufbereitung und die Entsorgung von Kühlschmierstoffen in offenen Kühlschmiersystemen getrieben. Die Kosten für den Einsatz von Kühlschmierstoffen in offenen Kühlkreisläufen übersteigen den Anteil der Werkzeugkosten in der spanenden Fertigung um ein Vielfaches. Außerdem verhindert der geschlossene Temperierkreislauf eine negative Beeinflussung der Umwelt.

Erfindungsgemäß wird ein neues Werkzeug bspw. aus Hartmetall, Keramiken oder kubischem Bornitrid, geeignet zum Zerspanen, vorgesehen, welches eine innenliegende Verdampferkühlung in Form einer Drossel aufweist, insbesondere in Form einer Wendeschneidplatte, vorgesehen.

Zur Herstellung des neuen Werkzeugs -mit entsprechend innliegenden Geometrien zur Ausbildung einer Verdampferkühlung- wird selektives Laserstrahlschmelzen etwa unter Verwendung von Wolframcarbiden, Keramiken, und entsprechenden Bindern vorgesehen. Einsintern der wesentlichen konstruktiven Merkmale ermöglicht die Ausbildung einer innenliegenden Verdampferkühlung in den Korpus des Zerspanwerkzeugs.

### Ausführungsbeispiele

In einem ersten Ausführungsbeispiel, ist dazu die Ausbildung eines Diffusors, in dem das Arbeitsfluid verdampft, in räumlicher Nähe zum funktionellen Bereich des Werkzeugs, also etwa in der Nähe einer Schneide, vorgesehen.

Ausgehend von diesem Verdampferbereich strömt der Dampf des Arbeitsfluid zu einem Kondensationsbereich, welcher mit einer Rückführeinrichtung, in diesem Ausführungsbeispiel in Form einer Kolbenpumpe, zur Rückführung in den Verdampfungsbereich zusammen wirkt.

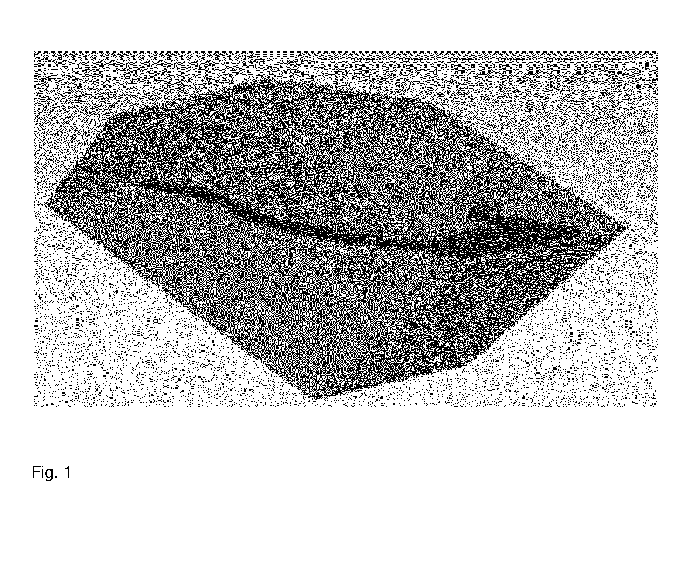

Fig. 1 zeigt eine Prinzipskizze eines entsprechenden Schneidwerkzeugs.

Als Arbeitsfluide für diese Ausführungsbeispiel mit aktiver Rückführeinrichtung können, je nach Arbeitstemperatur Wasser oder verschiedene Fluorkohlenwassersftoffe (FKW), Ammoniak (NH3), Kohlendioxid (CO2) oder Kohlenwassersstoffe, wie Butan oder Propan eingesetzt werden. Besonders vorteilhaft ist die Mischung verschiedener Arten von FKW, da dadurch die Dampfdruckkurve des Mediums -im Gegensatz zu den reinen Arbeitsfluiden oder -medien- nach den Bedürfnissen angepasst werden kann.

Zur Optimierung der Arbeitstemperatur des erfindungsgemäßen Werkzeugs wird so vorgegangen, dass -mit dem jeweils gewählten Material- Tests vorgenommen werden, TM 640 um den optimalen Eindringkoeffizient (Wärmeeindringkoeffizient) zu ermitteln. Da dies eine Funktion der Temperatur ist, wird dazu die Temperatur variiert, wobei natürlich auch die Abnutzung des Werkzeugs, d.h. die Abhängigkeit der Härte des Materials von der jeweiligen Temperatur beachtet werden muss.

Für K10 Hartmetall hat sich so in den der Erfindung zugrunde liegenden Versuchen eine Arbeitstemperatur von minus 70 °C als optimal herausgestellt (also rund 203 K) herausgestellt.

Ermittelte Vorteile sind -neben der Trockenzerspanung und damit der geringeren Umweltbelastung und besseren Nutzbarkeit der Späne- insbesondere eine um den Faktor 1,4 erhöhte Standzeit im Falle des hier betrachteten Materials K10.

Nicht dargestellt ist ein bevorzugtes Ausführungsbeispiel, bei dem mehrere Verdampfungsbereiche, z.B. in Form von Drosseln, parallel zueinander in der Nähe des Funktionsbereiches des Werkzeugs, also etwa in räumlicher Nähe und gutem, thermisch leitendem Kontakt zu einer Schneidkante (im Falle eines Zerspanwerkzeugs) angeordnet sind und mit einer oder mehreren parallel oder in Serie arbeitenden aktiven Rückführeinrichtungen für das Kondensat zusammen wirken.

Ebenso kann eine Kaskadierung von Verdampfungsbereichen und Rückführeinrichtungen vorgesehen sein, etwa um den jeweils optimalen Wirkungsgrad verschiedener Arbeitsfluide auszunutzen.

Ebenso kann ein gemeinsamer Verdampfungsbereich, aber getrennte Kondensationsbereiche, welcher mit einer jeweils gesonderten Rückführeinrichtung fluiddurchströmbar verbunden sein, um die Mischung von verschiedenen Arbeitsfluiden in dem gemeinsamen Verdampfungsbereich und die Trennung dieser über die Verdampfungstemperatur in den getrennten Kondensationsbereichen zu nutzen.

Nicht dargestellt ist ein besonders bevorzugtes Ausführungsbeispiel, welches eine größere Lageunabhängigkeit des Werkzeugs ermöglicht.

In diesem Ausführungsbeispiel wird der Mechanismus eines Wärmerohres (heat pipe) und die Rückführung des Kondensats über Kappilarstrukturen an den Wandungen eines Wärmerohres genutzt. Dabei ist in diesem Beispiel die Bauform nicht auf die eines Rohres als innenliegende Verdampferkühlungs-Einrichtung eingeschränkt.

Durch Auskleidung der entsprechenden Kanäle etwa durch eine netzartige Struktur, welche eine Kapillar- oder Dochtstruktur zur Rückführung des Kondensatzs zum Verdampfungsbereiches nutzt, können beliebig, etwa durch Sintern oder selektives Laserstrahlschmelzen, hergestellte Innenstrukturen im Sinne eines Wärmerohres verwendet werden.

Als Arbeitsfluide kommen für den Bereich von ca. 10 bis 50 °K H2 und NO für den Bereich von 50 bis 100 °K N2 und 02, für den Bereich von 100 bis 500 °K kommen CH4, F-21, F-11, C6H6, CH30H, CH30H und H20 in Betracht.

Nicht dargestellt ist ein weiteres, besonders bevorzugtes Ausführungsbeispiel, bei welchem innerhalb des üblicherweise unter Vakuum ziehen befüllten Wärmerohrs ein Gaspropfen als "Puffer" eingebracht wurde, um je nach Temperatur des Dampfes des Arbeitsfluids den Kondensationsbereich mehr oder weniger zu blockieren, wodurch eine Regelung der Kühlleistung möglich ist.

Es können auch mehrere Wärmerohr -thermisch leitend- in Serie geschaltet oder parallel arbeitend innerhalb eines Werkstücks vorgesehen sein.

## Patentansprüche

1. Werkzeug mit einem als Schneide ausgebildeten Funktionsbereich, geeignet zum Bearbeiten, insbesondere zerspanenden Bearbeiten, von Werkstücken, wobei
- das Werkzeug eine innenliegende Verdampferkühlung mit geschlossenem Kreislauf aufweist,
- die Verdampferkühlung zumindest einen im Inneren des Werkzeugs angeordneten Verdampfungsbereich aufweist, wobei der Verdampfungsbereich zumindest thermisch leitend mit dem Funktionsbereich verbunden ist, und
- der Verdampfungsbereich geeignet zur Aufnahme von Wärme in dem thermisch leitend verbundenen Funktionsbereich ist
**dadurch gekennzeichnet, dass**
der Verdampfungsbereich in Form einer Drossel ausgeführt ist.

2. Werkzeug nach Anspruch 1, **dadurch gekennzeichnet, dass** zumindest ein Kondensationsbereich innerhalb und/oder an der Oberfläche und/oder außerhalb des Werkzeugkorpus angeordnet, vorgesehen ist.

3. Werkzeug nach Anspruch 2, **dadurch gekennzeichnet, dass** eine Kondensatzrückführeinrichtung aktiv, d.h. durch Zuführung von Energie betriebene Pumpe, etwa Kolbenpumpe, oder/und passiv, etwa durch Nutzung von Kapillarkräften betreibbar ausgeführt ist.

4. Werkzeug nach einem der Ansprüche 1 bis 3, **dadurch gekennzeichnet, dass** für die Verdampferkühlung ein Wärmerohr mit Kapillarstruktur in den Innenwandungen oder/und mit an den Innenwandungen anliegenden Netzen zur Rückführung des Kondensats in den Verdampfungsbereich vorgesehen ist.

5. Werkzeug nach einem der Ansprüche 1 bis 4, **dadurch gekennzeichnet, dass** für die Verdampferkühlung mehrere innenliegende oder in der Nähe des zu kühlenden Funktionsbereiches angeordnete, Verdampfungsbereiche parallel zueinander oder/und in Serie zu einander thermisch leitend oder mit Austausch des Arbeitsfluids untereinander, vorgesehen sind.

6. Werkzeug nach einem der Ansprüche 1 bis 5, **dadurch gekennzeichnet, dass** als Arbeitsfluide für einen Bereich von rund minus 70°C FKWs, NH₃ oder Kohlenwasserstoffe, wie Butan oder Propan oder Mischungen davon vorgesehen sind.

7. Werkzeug nach einem der Ansprüche 1 bis 6, **dadurch gekennzeichnet, dass** als Arbeitsfluide für den Bereich von ca. 10 bis 50 °K H2 und NO, für den Bereich von 50 bis 100 °K N2 und O₂, für den Bereich von 100 bis 500 °K CH4, F-21, F-11, C6H6, CH₃OH, CH₃OH und H₂0 vorgesehen sind.

8. Werkzeug nach einem der Ansprüche 1 bis 7, **dadurch gekennzeichnet, dass** das Werkzeug einstückig und bestehend aus laserschmelz- und sinterbaren Hartmetallen, Keramiken oder anderen Hartstoffen für die Zerspanung ausgeführt ist.

9. Verfahren zum Betrieb eines der Werkzeuge nach einem der Ansprüche 1 bis 8, **dadurch gekennzeichnet, dass** zur Kühlung des Werkzeugs zumindest in der Nähe des sich im Betrieb erhitzenden Funktionsbereiches ein innenliegend im Werkzeug angeordneter sowie für das Arbeitsfluid in sich geschlossener Verdampfungs- und Kondensationsprozess verwendet wird, wobei der Verdampfungsbereich in Form einer Drossel ausgeführt ist.

10. Verwendung eines der Werkzeuge nach einem der Ansprüche 1 bis 8 zum Zerspanen.

## Claims

1. Tool comprising an operating region which is formed as a cutting edge and suitable for working, in particular machining, workpieces, the tool comprising an inner evaporator cooling system having a closed circuit, the evaporator cooling system comprising at least one evaporation region arranged inside the tool, the evaporation region being connected to the operating region at least in a thermally conductive manner, and the evaporation region being suitable for absorbing heat in the operating region connected in a thermally conductive manner, **characterised in that** the evaporation region is in the form of a constriction.

2. Tool according to claim 1, **characterised in that** at least one condensation region is provided within and/or on the surface of and/or outside the tool body.

3. Tool according to claim 2, **characterised in that** a condensate return device is designed to be actuatable actively, i.e. by pumps driven by a supply of energy, for example piston pumps, and/or passively, for example through the use of capillary forces.

4. Tool according to any of claims 1 to 3, **characterised in that**, for the evaporator cooling system, there is provided a heat pipe which has a capillary structure in the inner walls and/or networks abutting the inner walls for returning the condensate to the evaporation region.

5. Tool according to any of claims 1 to 4, **characterised in that**, for the evaporator cooling system, there are provided a plurality of evaporation regions which are arranged internally or near the operating region to be cooled, and in parallel and/or in series with one another in a thermally conductive manner or with mutual exchange of the working fluid.

6. Tool according to any of claims 1 to 5, **characterised in that** fluorocarbons, NH₃ or hydrocarbons such as butane or propane or mixtures thereof are provided as working fluids for a range of approximately -70 °C.

7. Tool according to any of claims 1 to 6, **characterised in that** H₂ and NO are provided as working fluids for the range of from approximately 10 to 50 °K, N₂ and O₂ are provided as working fluids for the range of from 50 to 100 °K and CH₄, F-21, F-11, C₆H₆, CH₃OH, CH₃OH and H₂O are provided as working fluids for the range of from 100 to 500 °K.

8. Tool according to any of claims 1 to 7, **characterised in that** the tool is designed in one piece and consists of hard metals which can be laser-melted and sintered, ceramics or other hard materials for the machining.

9. Method for operating any of the tools according to any of claims 1 to 8, **characterised in that**, in order to cool the tool, an evaporation and condensation process is used, at least near the operating region that heats up during operation, which is arranged inside the tool and is a closed loop for the working fluid, the evaporation region being in the form of a constriction.

10. Use of any of the tools according to any of claims 1 to 8 for machining.

## Revendications

1. Outil, avec une zone fonctionnelle constituée en tant qu'arête de coupe, adapté pour l'usinage de pièces, en particulier l'usinage par enlèvement de copeaux,
- l'outil présentant un refroidissement par évaporateur intérieur à circuit fermé,
- le refroidissement par évaporateur présentant au moins une zone d'évaporation disposée à l'intérieur de l'outil, la zone d'évaporation étant raccordée au moins de façon thermiquement conductrice à la zone fonctionnelle, et
- la zone d'évaporation étant adaptée pour la réception de chaleur dans la zone fonctionnelle raccordée de façon thermiquement conductrice,
**caractérisé en ce que**
la zone d'évaporation est réalisée sous forme d'un étrangleur

2. Outil selon la revendication 1, **caractérisé en ce qu'**il est prévu au moins une zone de condensation à l'intérieur et/ou à la surface et/ou à l'extérieur du corps de l'outil.

3. Outil selon la revendication 2, **caractérisé en ce qu'**un dispositif de reconduite de condensat est réalisé de façon à pouvoir être exploité activement, c'est-à-dire par une pompe entraînée par amenée d'énergie, par exemple une pompe à piston, ou/et passivement, par exemple par utilisation de forces capillaires.

4. Outil selon une des revendications 1 à 3, **caractérisé en ce que**, pour le refroidissement par évaporateur, il est prévu un tube de chaleur à structure capillaire dans les parois intérieures ou/et avec des réseaux, adjacents aux parois intérieures, pour la reconduite du condensat vers la zone d'évaporation.

5. Outil selon une des revendications 1 à 4, **caractérisé en ce que**, pour le refroidissement par évaporateur, il est prévu plusieurs zones d'évaporation disposées intérieurement ou à proximité de la zone fonctionnelle à refroidir, parallèlement , ou/et en série les unes par rapport aux autres, de façon thermiquement conductrice, ou avec échange du fluide de travail entre elles.

6. Outil selon une des revendications 1 à 5, **caractérisé en ce que**, en tant que fluides de travail, il est prévu, pour une plage d'environ moins 70 °C, des HFC, NH₃ ou des hydrocarbures tels que le butane ou le propane, ou des mélanges de ceux-ci.

7. Outil selon une des revendications 1 à 6, **caractérisé en ce que**, sont prévus en tant que fluides de travail, pour la plage d'environ 10 à 50 °K : N₂ et O₂, pour la plage d'environ 50 à 100 °K : N₂ et 0₂, et pour celle d'environ 100 à 500 °K, CH₄, F-21, F-11, C₆H₆, CH₃OH, CH₃OH et H₂O.

8. Outil selon une des revendications 1 à 7, **caractérisé en ce que** l'outil est réalisé d'une seule pièce et composé de métaux durs pouvant être fondus par laser et frittés par laser, de céramiques ou d'autres matériaux durs pour l'usinage par enlèvement de copeaux.

9. Procédé de fonctionnement d'un des outils selon une des revendications 1 à 8, **caractérisé en ce que**, pour le refroidissement de l'outil, du moins à proximité de la zone fonctionnelle qui s'échauffe pendant le fonctionnement, un processus d'évaporation et de condensation situé à l'intérieur de l'outil et fermé sur lui-même pour le fluide de travail est utilisé, la zone d'évaporation étant réalisée sous forme d'un étrangleur.

10. Utilisation d'un des outils selon une des revendications 1 à 8 pour l'usinage par enlèvement de copeaux.
